Europäisches Patentamt

European Patent Office

Office européen des brevets

(19)

(11) Veröffentlichungsnummer : **0 071 183**
**B1**

(12) # EUROPÄISCHE PATENTSCHRIFT

(45) Veröffentlichungstag der Patentschrift :
05.03.86

(21) Anmeldenummer : 82106597.6

(22) Anmeldetag : 21.07.82

(51) Int. Cl.⁴ : **A 23 P 1/00, A 23 L 1/18,
B 30 B 11/22**

(54) **Düsenkopf.**

(30) Priorität : 29.07.81 DE 3129947

(43) Veröffentlichungstag der Anmeldung :
09.02.83 Patentblatt 83/06

(45) Bekanntmachung des Hinweises auf die Patenterteilung : 05.03.86 Patentblatt 86/10

(84) Benannte Vertragsstaaten :
BE FR GB IT NL

(56) Entgegenhaltungen :
FR-A- 2 191 848
FR-A- 2 225 274
GB-A- 1 253 104
US-A- 3 615 675

(73) Patentinhaber : **Convent Knabber-Gebäck GmbH &
Co. KG
Linnichhaus Linnicher Strasse 48
D-5000 Köln 41 (DE)**

(72) Erfinder : **Pfeilstetter, Hans
Herzogfriedrichstrasse 11
D-8261 Ampfing (DE)**

(74) Vertreter : **Patentanwälte Müller-Boré, Deufel,
Schön, Hertel, Lewald, Otto
Postfach 26 02 47 Isartorplatz 6
D-8000 München 26 (DE)**

## Beschreibung

Die Erfindung betrifft einen Düsenkopf für einen Kochextruder, mit senkrecht zur Extruderschneckenachse verlaufender Düsenachse, wobei durch die Extruderdüse hindurch sich ein mit einem Hohldorn einen Ringraum bildendes Füllrohr erstreckt und wobei der Hohldorn das Füllrohr von dem die Schmelze führenden Raum trennt und sich bis zur Austrittsöffnung der Extruderdüse erstreckt.

Ein derartiger Düsenkopf für einen Kochextruder ist aus der DE-OS 23 17 696 bekannt. Mit einem derartigen Düsenkopf für einen Kochextruder wird kontinuierlich ein Hüllkörper ausgebildet, der mit einer eßbaren Masse vollständig in einem Arbeitsgang gefüllt wird. Die Füllmasse wird dabei durch ein Füllrohr gepreßt und das durch eine Extruderschnecke zugeführte Hüllmaterial wird um einen Hohldorn herum ausgestoßen, der aus thermischen Gründen mit dem Füllrohr einen isolierenden Ringraum einschließt. Nachteilig bei dieser bekannten Vorrichtung ist, daß infolge unzureichender Verdichtung häufig Dünnstellen oder Fließnähte in dem Hüllkörper ausgebildet sind, wodurch das Aussehen des Endprodukts beeinträchtigt ist und oft sogar ein Austreten des Füllmaterials erfolgt.

Der Erfindung liegt demgegenüber die Aufgabe zugrunde, den Kochextruder derart auszubilden, daß der Hüllkörper zur Ummantelung der Füllmasse gleichmäßig und ohne Fließnähte oder Dünnstellen ausgebildet werden kann.

Erfindungsgemäß wird diese Aufgabe dadurch gelöst, daß die aus der Extruderschnecke austretende Schmelze in zwei Teilströme aufgeteilt ist, die unter Umlenkung um 90° um den Hohldorn herum stromauf von der Extruderdüse zusammengeführt sind und daß stromauf der Extruderdüse im Fließweg der Schmelze ein Verwischgewinde eingebaut ist. Damit ist es möglich, den Raum, der den Hohldorn umgibt, in richtiger Weise zu füllen, so daß ein guter Hüllkörper geschaffen wird. Die Strömungsgeschwindigkeit und der Druck der Schmelze können sich gleichmäßig um den Umfang des Dorns herum verteilen. Damit wird erreicht, daß um den ganzen Umfang herum das Hüllmaterial in konstanter Stärke ausgebildet wird.

An den Stellen, an denen die beiden Schmelzteilströme zusammenfließen, kann es aufgrund unterschiedlicher langer Fließwege sowie unterschiedlicher mechanischer und thermischer Belastungen der Schmelze unter Umständen zu einem unvollständigen Zusammenfließen der beiden Teilströme kommen. Beim Austrag aus der Extruderdüse können dadurch Fließnähte oder Dünnstellen im extrudierten Hüllkörper entstehen, an denen die Füllmasse austreten kann. Um der Ausbildung von Fließnähten entgegenzuwirken, wird das Verwischgewinde eingebaut. Das Verwischgewinde erzeugt eine Umlenkung des Schmelzstromes in tangentialer Richtung, wodurch die Fließnähte verwischt werden. Dabei ist es besonders vorteilhaft, wenn das Verwischgewinde den Dorn umgibt.

Gemäß einer bevorzugten Ausführungsform kann ein austauschbarer Ring unter Bildung eines Ringraumes das Verwischgewinde umgeben. Durch das Einsetzen unterschiedlich dicker Ringe kann die Breite des Ringspaltes zwischen dem Verwischgewinde und dem Metallring eingestellt werden, so daß die Schmelzführung den rheologischen Eigenschaften der Schmelze optimal angepaßt werden kann.

Die Zuführung der Extruderschmelze und die Zuführung der Füllmasse sind vollständig voneinander getrennt, so daß eine Dosierung beider Komponenten ohne gegenseitige Temperaturbeeinflussung möglich ist. Die Füllmasse wird in einem Abstand von etwa 40 cm von der Extruderdüse aus gerechnet durch das Füllrohr in den erstarrten Hüllkörper eingespeist. Die gefüllte erstarrte Röhre wird durch eine Abquetschvorrichtung in einzelne Riegel unterteilt, die anschließend getrocknet werden.

Die Extruderdüse kann mit einem Gewinde ausgestattet sein, so daß sich beim Einschrauben in den Düsenkopf ein Stauraum mit variablem Volumen ergibt. Durch das Verdrehen der Extruderdüse kann der Stauraum verkleinert bzw. vergrößert werden. Damit kann während der Extrusion eine optimale Anpassung an die Fließeigenschaft der zu verarbeitenden Substanz erfolgen, so daß ein geschlossenes, gleichmäßig expandiertes Rohr aus dem Extruder austritt.

Als vorteilhaft hat sich die Verwendung eines mit Kunststoff (Teflon) überzogenen Stahlrohrs erwiesen, da sich dadurch eine bessere thermische Trennung in der kalten Füllmasse und der noch heissen Füllkörper ergibt.

Ein weiterer Vorteil des kunststoffbeschichteten Füllrohres ist die bessere Gleitfähigkeit, so daß ein Haften des expandierten Hüllkörpers auf dem Füllrohr sicher verhindert wird.

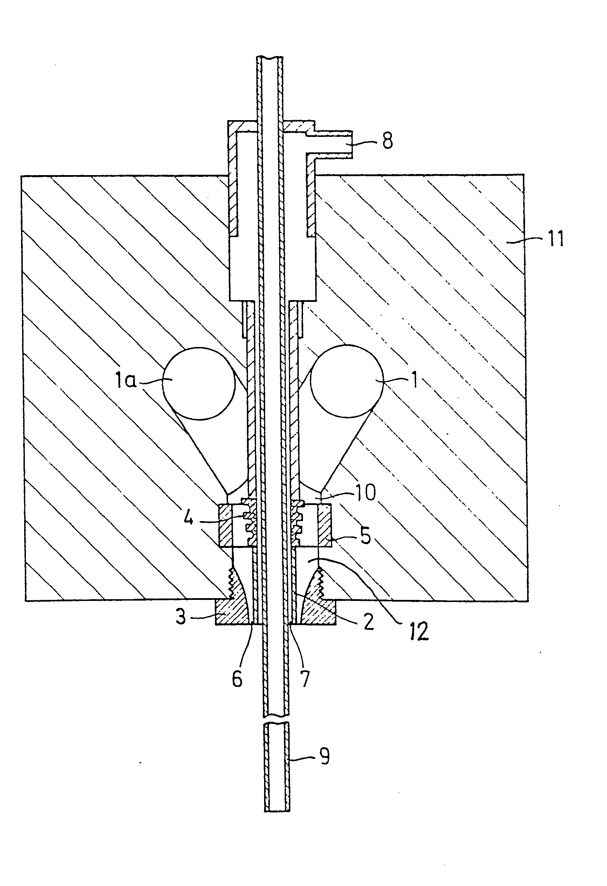

Ein Ausführungsbeispiel der Erfindung soll in der folgenden Beschreibung unter Bezugnahme auf die Zeichnung erläutert werden.

Die Zeichnung stellt einen Schnitt durch den Düsenkopf des Kochextruders dar, wobei dieser Schnitt senkrecht zur Schneckenachse verläuft. Der Schneckenabschnitt des Kochextruders ist nicht dargestellt.

Der Düsenkopf 11 weist zwei Schmelzzuleitungen 1a und 1 auf, wobei die Schmelze senkrecht zur Zeichenebene aus der Extruderschnecke austritt und dem Düsenkopf 11 zugeführt wird. Die Teilströme 1 und 1a werden zur Extruderdüse 3 hin um 90° nach unten umgelenkt.

Durch die Extruderdüse 3 hindurch erstreckt sich ein Füllrohr 9, und dieses Füllrohr leitet die Füllmasse. Das Füllrohr 9 mündet in einem Abstand von etwa 40 cm von der Extruderdüse 3.

In dem die Schmelze führenden Raum 10 wird das Füllrohr 9 von einem Hohldorn 2, der rohrförmig ausgebildet ist, derart umgeben, daß dieser Dorn 2 stromauf der Austrittsöffnung 6 das Füllrohr 9 von der Schmelze isoliert.

Diese Isolierung hält das Füllrohr 9 kühl und verhindert zum anderen, daß sich die Schmelze in der Austrittsöffnung der Extruderdüse 3 derart abkühlt, daß keine Verdampfung der Flüssigkeit mehr stattfindet.

Zwischen dem Füllrohr 9 und dem Hohldorn 2 befindet sich ein Ringraum 7, und dieser Ringraum 7 steht mit einer Dampfabsaugungsvakuumpumpe 8 in Verbindung.

Wenn die Schmelze aus der Extruderdüse 3 austritt und expandiert, entstehen große Dampfmengen, die den rohrförmigen porösen Körper aufweichen könnten. Dies wird durch das Absaugen des entstehenden Dampfes sicher verhindert.

Die Aufteilung in zwei Teilströme 1 und 1a ist erforderlich, um den Ringraum um den Hohldorn 2 herum in ausreichender Weise mit Schmelze zu füllen. Um eine Nahtbildung am Hüllkörper zu verhindern, die zu Schwachstellen führen könnte, ist im Fließweg der Schmelze ein Verwischgewinde 4 vorgesehen. Zweckmäßigerweise umgibt das Verwischgewinde 4 den Dorn 2. Der Zweck des Verwischgewindes 4 ist es, den Schmelzestrom tangential umzulenken und somit evtl. Nahtstellen zu verwischen.

In der Höhe des Verwischgewindes ist im Fließweg der Schmelze ein austauschbarer Ring 5 angeordnet, der mit dem Verwischgewinde einen Ringspalt bildet, und durch unterschiedlich dicke Metallringe 5 kann dieser Ringspalt eingestellt werden, um den Fließweg den rheologischen Eigenschaften der Schmelze optimal anzupassen.

Die Extruderdüse 3 ist mit einem Gewinde versehen, so daß sie in den Düsenkopf einschraubbar bzw. aus diesem herausschraubbar ist. Damit ist es möglich, das Volumen eines Stauraum 12 zu variieren, um eine optimale Anpassung an die Fließeigenschaften des Hüllmaterials zu erreichen.

**Patentansprüche**

1. Düsenkopf für einen Kochextruder, mit senkrecht zur Extruderschneckenachse verlaufender Düsenachse, wobei durch die Extruderdüse hindurch sich ein mit einem Hohldorn einen Ringraum bildendes Füllrohr erstreckt und wobei der Hohldorn das Füllrohr von dem die Schmelze führenden Raum trennt und sich bis zur Austrittsöffnung der Extruderdüse erstreckt, dadurch gekennzeichnet, daß die aus der Extruderschnecke austretende Schmelze in zwei Teilströme (1, 1a) aufgeteilt ist, die unter Umlenkung um 90° um den Hohldorn (2) herum stromauf von der Extruderdüse (3) zusammengeführt sind, und daß stromauf der Extruderdüse (3) im Fließweg der Schmelze ein Verwischgewinde (4) eingebaut ist.

2. Düsenkopf nach Anspruch 1, dadurch gekennzeichnet, daß das Verwischgewinde (4) den Hohldorn (2) umgibt.

3. Düsenkopf nach Anspruch 2, dadurch gekennzeichnet, daß ein austauschbarer Ring (5) unter Bildung eines Ringraumes das Verwischgewinde (4) umgibt.

4. Düsenkopf nach einem der Ansprüche 1 bis 3, dadurch gekennzeichnet, daß die Extruderdüse (3) mit einem Gewinde ausgestattet ist, so daß sich beim Einschrauben in den Düsenkopf ein Stauraum (12) mit variablem Volumen ergibt.

5. Düsenkopf nach einem der Ansprüche 1 bis 4, dadurch gekennzeichnet, daß das Füllrohr (9) aus einem Stahl oder einem temperaturbeständigen Kunststoff oder einem kunststoffbeschichteten Stahlrohr besteht.

**Claims**

1. Die head for a cooking extruder, with the die axis running at right angles to the extruder screw axis, wherein a filling tube forming an annular space with a hollow mandrel extends through the extruder die and wherein the hollow mandrel separates the filling tube from the space through which the melt passes and extends up to the exit orifice of the extruder die, characterised in that the melt issuing from the extruder screw is divided into two part-streams (1, 1a) which are deflected through 90° and combined together around the hollow mandrel (2) upstream of the extruder die (3), and that a smear thread (4) is fitted in the flow path of the melt, upstream of the extruder die (3).

2. Die head according to claim 1, characterised in that the smear thread (4) surrounds the hollow mandrel (2).

3. Die head according to claims 2, characterised in that an exchangeable ring (5) surrounds the smear thread (4), forming an annular space.

4. Die head according to one of claims 1 to 3, characterised in that the extruder die (3) is equipped with a thread so that when it is screwed into the die head an accumulation space (12) of variable volume results.

5. Die head according to one of claims 1 to 4, characterised in that the filling tube (9) consists of a steel or a heat-resistant plastic or a plastic-coated steel tube.

**Revendications**

1. Tête d'extrusion pour une extrudeuse culinaire, avec un axe de buse dirigé perpendiculairement à l'axe de la vis d'extrudeuse, dans laquelle un tube de remplissage formant avec un mandrin creux un espace annulaire s'étend à travers la buse d'extrudeuse, le mandrin creux séparant le tube de remplissage de l'espace dans lequel s'écoule la masse fondue et s'étendant jusqu'à l'orifice de sortie de la buse d'extrudeuse, caractérisée en ce que la masse fondue sortant de la vis d'extrudeuse est fractionnée en deux courants partiels (1, 1a) qui, en déviant de 90° autour du mandrin creux (2), se réunissent en amont de la buse d'extrudeuse (3) et qu'un filetage d'effacement (4) est monté en amont de la buse d'extrudeuse (3) sur le parcours d'écoulement de la masse fondue.

2. Tête d'extrusion selon la revendication 1, caractérisée en ce que le filetage d'effacement (4) entoure le mandrin creux (2).

3. Tête d'extrusion selon la revendication 2, caractérisée en ce qu'une bague (5) interchangeable entoure le filetage d'effacement (4) en formant un espace annulaire.

4. Tête d'extrusion selon une quelconque des revendications 1 à 3, caractérisée en ce que la buse d'extrudeuse (3) est équipée d'un filetage de sorte que lorsqu'on la visse dans la tête d'extrusion, il se forme une chambre de retenue (12) à volume variable.

5. Tête d'extrusion selon une quelconque des revendications 1 à 4, caractérisée en ce que le tube de remplissage (9) est fait en acier ou en matière plastique stable à la température, ou est un tube d'acier recouvert d'une couche de matière plastique.